# DEMANDE DE BREVET EUROPEEN

(11) **EP 4 395 204 A1**
(43) Date de publication de la demande: **03.07.2024**
(21) Numéro de dépôt: 23220214.3
(22) Date de dépôt: 26.12.2023
(51) Int. Cl.: H04B 7/185, H04B 17/391, H04B 17/345

(54) **PROCÉDÉ DE DÉTERMINATION D'UNE CAUSE DE PERTURBATION SUR UNE COMMUNICATION ENTRE AU MOINS UN SATELLITE ET AU MOINS UN TERMINAL, PRODUIT PROGRAMME D ORDINATEUR ET DISPOSITIF ÉLECTRONIQUE DE DÉTERMINATION ASSOCIÉS**

(30) Priorité: 27.12.2022 FR 2214529
(71) Demandeur: THALES, 92190 Meudon (FR)
(72) Inventeur: DAVID, Christophe, 92622 GENNEVILLIERS CEDEX (FR)
(74) Mandataire: Lavoix

(57) **Abrégé**

La présente invention concerne un procédé de détermination d'une cause de perturbation sur une communication entre un satellite 20 et un terminal 25. Le procédé comprend une phase d'apprentissage comprenant la réception d'un jeu de données d'entraînement, et l'entraînement d'un module d'apprentissage automatique à partir du jeu reçu. Chaque donnée d'entraînement comprend un groupe de paramètres représentatifs d'une qualité de signaux échangés entre le(s) satellite(s) et le(s) terminal(aux), et une cause de perturbation associée au groupe de paramètres.

Le procédé comprend en outre une phase d'exploitation comprenant l'acquisition d'un groupe de paramètres à tester représentatifs de la qualité de la communication à tester, et la détermination de la cause de perturbation par application du modèle entraîné au groupe de paramètres acquis.

## Description

La présente invention concerne un procédé de détermination d'une cause de perturbation sur une communication entre au moins un satellite et au moins un terminal. La présente invention concerne également un produit programme d'ordinateur et un dispositif électronique de détermination associés.

Plus particulièrement, l'invention concerne le domaine de la qualité des signaux échangés entre au moins un terminal terrestre et au moins un satellite.

Dans le domaine des communications entre un satellite est des terminaux terrestres, la qualité des signaux échangés est un facteur crucial. En effet, lorsque la qualité n'est pas suffisante, des informations peuvent être perdues, et donc jamais reçues.

La qualité des signaux échangés est influencée par de nombreuses causes, notamment environnementales.

Selon un premier exemple, de mauvaises conditions météorologiques perturbent les signaux électromagnétiques, réduisant ainsi la qualité de la communication.

Selon un deuxième exemple, les signaux sont influencés par une intervention humaine volontaire. Dans ce cas, on parle de brouillage électromagnétique.

Dans les deux exemples précédents, l'altération de la qualité des signaux échangés est temporaire.

Il est connu de détecter une altération des signaux échangés en évaluant différents paramètres représentatifs de la qualité des signaux échangés.

Lorsqu'une altération est détectée, il est connu de commuter temporairement de moyens de communication pour transmettre les informations les plus importantes afin d'éviter que de telles informations ne soient perdues.

Une fois l'altération passée, la communication entre le satellite et les terminaux est rétablie dans son régime nominal.

Cependant, dans certains cas, il n'est pas possible d'effectuer une telle commutation.

Il existe donc un besoin pour une meilleure gestion des perturbations.

A cet effet, la présente invention concerne un procédé de détermination d'une cause de perturbation sur une communication entre au moins un satellite et au moins un terminal, le procédé étant mis en oeuvre par un dispositif électronique de détermination 30 et comprenant une phase d'apprentissage comprenant les étapes suivantes :
- la réception d'un jeu de données d'entraînement,
   chaque donnée d'entraînement comprenant :
   ∘ un groupe de paramètres représentatifs d'une qualité de signaux échangés entre le(s) satellite(s) et le(s) terminal(aux), et
   ∘ une cause de perturbation associée au groupe de paramètres,
- l'application d'un algorithme d'entraînement automatique à un modèle d'intelligence artificielle comportant un réseau de neurones, à partir du jeu de données d'entraînement, pour obtenir un modèle entraîné,
le procédé comprenant en outre une phase d'exploitation 200 comprenant les étapes suivantes :
- l'acquisition d'un groupe de paramètres à tester représentatifs de la qualité de la communication à tester, et
- la détermination de la cause de perturbation par application du modèle entraîné au groupe de paramètres à tester acquis.

Le procédé de détermination selon l'invention permet donc de déterminer la cause de perturbation dans les signaux échangés. Ainsi, une action corrective peut être mise en oeuvre pour pallier à la perturbation et donc réduire le temps pendant lequel les communications ne sont pas nominalement fonctionnelles.

Selon des modes de réalisation particuliers, le procédé de détermination comprend une ou plusieurs des caractéristiques suivantes, prises isolément ou suivant toutes les combinaisons techniquement possibles :
- lors de l'étape de détermination de la phase d'exploitation, la cause de perturbation est déterminée parmi un ensemble prédéfini de causes comprenant au moins une cause d'origine accidentelle et au moins une cause d'introduction volontaire d'un signal parasite dans les signaux échangés entre le(s) satellite(s) et le(s) terminal(aux) ;
- l'ensemble prédéfini de causes comprend :
   ∘ une pluie dans un environnement du ou des terminaux,
   ∘ un mauvais pointage d'antenne(s) du ou des terminaux,
   ∘ une mauvaise configuration du ou des terminaux,
   ∘ un signal parasite à large bande introduit dans les signaux échangés entre le(s) satellite(s) et le(s) terminal(aux),
   ∘ un signal parasite à bande(s) partielle(s) introduit dans les signaux échangés entre le(s) satellite(s) et le(s) terminal(aux),
   ∘ un signal parasite à fréquence pure et fixe, introduit dans les signaux échangés entre le(s) satellite(s) et le(s) terminal(aux),
   ∘ un signal parasite à fréquence pure et mobile, introduit dans les signaux échangés entre le(s) satellite(s) et le(s) terminal(aux), et
   ∘ un signal parasite à peigne de raie, introduit dans les signaux échangés entre le(s) satellite(s) 20 et le(s) terminal(aux) ;
- le modèle d'intelligence artificielle comprend en outre un arbre de décision,
   le modèle entraîné obtenu suite à l'étape d'application de la phase d'entrainement comprenant un réseau de neurones entraîné et un arbre de décision entraîné ;
   l'étape de détermination de la phase d'exploitation comprenant :
      ∘ le calcul d'un indicateur de probabilité pour chaque cause de l'ensemble prédéfini de causes, par fourniture du groupe de paramètres à tester au réseau de neurones entraîné,
      ∘ le calcul d'un sous-ensemble de l'ensemble prédéfini de cause, par fourniture, à l'arbre de décision entraîné, du groupe de paramètres à tester, le sous-ensemble comprenant au moins une cause probable de perturbation, et
      ∘ la sélection de la cause de perturbation à partir des indicateurs de probabilité et du sous-ensemble calculés ;
- la cause de perturbation sélectionnée lors de l'étape de détermination de la phase d'exploitation est la cause comprise dans le sous-ensemble calculé et comprenant l'indicateur de probabilité calculé ayant la valeur la plus élevée ;
- la phase d'exploitation est répétée pour une pluralité de groupes de paramètres à tester, représentatifs de la qualité de la communication à tester à des instants distincts, formant des itérations de la phase d'exploitation,
   préférentiellement, chaque itération étant mise en oeuvre entre deux instants successifs correspondant chacun à un groupe de paramètres à tester ;
- le procédé comprend à l'issu de la phase d'exploitation, une étape de validation de la cause de perturbation lors de laquelle, si pour au moins un nombre prédéfini d'itérations de la phase d'exploitation, préférentiellement successives, la cause de perturbation déterminée est la même, alors valider cette cause comme étant est bien la cause de perturbation des signaux échangés entre le satellite et le terminal ; et
- chaque paramètre à tester est choisi dans un ensemble constitué de :
   ∘ une marge d'un rapport signal-sur-bruit de paliers d'une porteuse de signalisation,
   ∘ une marge d'un rapport signal-sur-bruit de paliers d'une porteuse de trafic,
   ∘ un niveau de la porteuse de signalisation et/ou de la porteuse de trafic,
   ∘ une valeur de débit binaire de signaux échangés entre le(s) satellite(s) et le(s) terminal(aux),
   ∘ une valeur de modulation de signaux échangés entre le(s) satellite(s) et le(s) terminal(aux),
   ∘ une valeur de codage de signaux échangés entre le(s) satellite(s) et le(s) terminal(aux),
   ∘ une puissance de consigne appliquée au(x) terminal(aux),
   ∘ une quantité totale de paquets perdus entre le(s) satellite(s) et le(s) terminal(aux),
   ∘ une quantité de paquets perdus dans différentes files de qualité de service pour chacune d'une pluralité de classes de service,
   ∘ une information d'entrée du(es) terminal(aux), et
   ∘ un profil d'onde garanti par le(s) terminal(aux).

La présente invention a également pour objet un produit programme d'ordinateur sur lequel est mémorisé un programme d'ordinateur comprenant des instructions de programme, le programme d'ordinateur étant chargé sur une unité de traitement de données et entraînant la mise en oeuvre d'un procédé tel que défini ci-dessus lorsque le programme d'ordinateur est mis en oeuvre sur l'unité de traitement des données.

La présente invention concerne également support lisible d'informations sur lequel est mémorisé un produit programme d'ordinateur comprenant des instructions de programme, le programme d'ordinateur étant chargé sur une unité de traitement de données et entraînant la mise en oeuvre d'un tel procédé de détermination lorsque le programme d'ordinateur est mis en oeuvre sur l'unité de traitement des données.

La présente invention a également pour objet un dispositif électronique de détermination d'une cause de perturbation sur une communication entre au moins un satellite et au moins un terminal, le dispositif électronique de détermination 30 comprenant une unité de traitement propre à mettre en oeuvre les étapes d'un procédé de détermination tel que décrit plus haut.

La présente invention a également pour objet un support lisible d'informations sur lequel est mémorisé un produit programme d'ordinateur comprenant des instructions de programme, le programme d'ordinateur étant chargé sur une unité de traitement de données et entraînant la mise en oeuvre d'un tel procédé lorsque le programme d'ordinateur est mis en oeuvre sur l'unité de traitement des données.

D'autres caractéristiques et avantages de l'invention apparaîtront à la lecture de la description qui suit de modes de réalisation de l'invention, donnés à titre d'exemple uniquement et en référence aux dessins qui sont :
- [Fig. 1] la figure 1 est une vue schématique d'un système de communication comprenant un dispositif électronique de détermination selon l'invention ; et
- [Fig.2] la figure 2 est un organigramme d'un procédé de détermination selon l'invention, mis en oeuvre par le dispositif électronique représenté sur la figure 1.

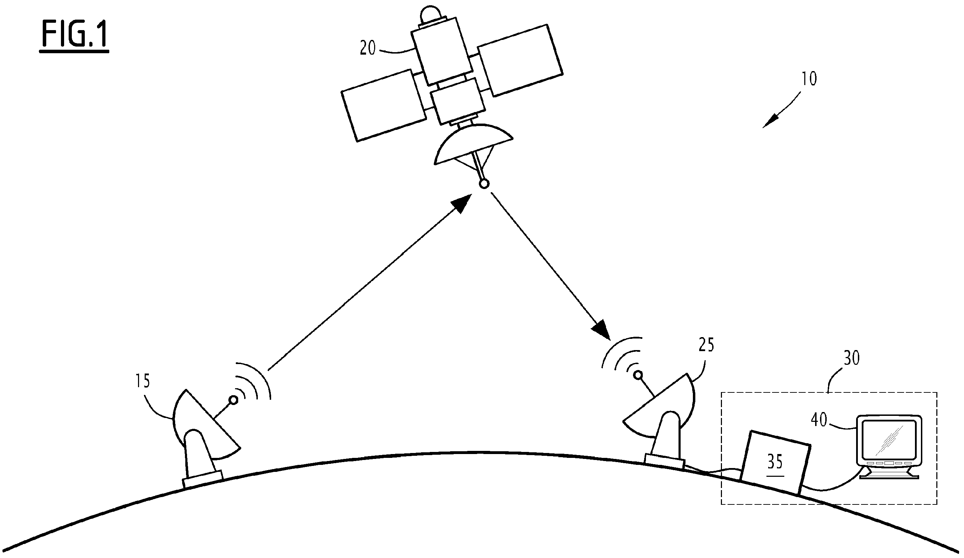

Sur la figure 1 est représenté un système de communication 10.

Le système de communication 10 comprend un émetteur 15, au moins un satellite 20, au moins un terminal 25 et un dispositif électronique de détermination 30.

Dans l'exemple représenté sur la figure 1, le système de communication comprend un satellite 20 et un terminal 25.

Préférentiellement, l'émetteur 15 et le terminal 25 sont localisés à la surface de la Terre. Le satellite 20 est localisé dans l'espace en orbite autour de la Terre.

Préférentiellement, l'émetteur 15 et le terminal 25 sont sensiblement éloignés l'un de l'autre. Par exemple, une distance entre l'émetteur 15 et le terminal 25 est supérieure à un kilomètre, préférentiellement supérieure à dix kilomètres, plus préférentiellement supérieure à cent kilomètres.

L'émetteur 15 est configuré pour émettre des signaux électromagnétiques à destination du satellite 20. Préférentiellement, les signaux électromagnétiques présentent une fréquence comprise entre 3 et 4 GHz en bande C, entre 7 et 8 GHz en bande X, entre 12 et 14 GHz pour la bande Ku, et entre 29 et 31 GHz pour la bande Ka et entre 37 et 52 GHz pour les bande Q/V.

Les signaux émis comprennent avantageusement des paquets de données.

Le satellite 20 est propre à recevoir les signaux électromagnétiques depuis l'émetteur 15, et à émettre des signaux électromagnétiques à destination du terminal 25

Le satellite 20 est par exemple un satellite transparent. Autrement dit, le satellite 20 retransmet, à destination du terminal 25, les signaux qu'il a reçu depuis l'émetteur 15, sans effectuer de traitement sur lesdits signaux. En d'autres termes, le satellite 20 a uniquement un rôle de relais des signaux électromagnétiques.

Le terminal 25 est propre à recevoir les signaux électromagnétiques depuis le satellite 20, via au moins une antenne. Le terminal 25 comprend par exemple un modem.

Préférentiellement, les signaux reçus comprennent une porteuse de trafic ou une porteuse de signalisation ainsi que du bruit. Les signaux des porteuses de trafic transportent de l'information sous forme de paquets, chacun associé à une file de qualité de service.

Le terminal 25 est par exemple propre à traiter les signaux électromagnétiques reçus pour extraire l'information contenue dans les signaux électromagnétiques et la communiquer un utilisateur du terminal 25.

Le terminal 25 est également propre à mesurer via des capteurs plusieurs caractéristiques des signaux reçus et à évaluer la qualité des signaux reçus depuis le satellite 20, par exemple via les caractéristiques mesurées. Pour cela, le terminal 25 est par exemple propre à évaluer au moins un paramètre parmi un ensemble prédéfini de paramètres.

L'ensemble prédéfini de paramètres est par exemple constitué d'un ou plusieurs de paramètres suivants :
- une marge du rapport signal-sur-bruit de paliers de la porteuse de signalisation,
- une marge du rapport signal sur bruit de paliers de la porteuse de trafic,
- un niveau de la porteuse de signalisation et/ou de la porteuse de trafic reçue(s),
- une valeur de débit binaire de signaux échangés entre le satellite 20 et le terminal 25,
- une valeur de modulation de signaux échangés entre le satellite 20 et le terminal 25,
- une valeur de codage de signaux échangés entre le satellite 20 et le terminal 25,
- une puissance de consigne appliquée au terminal 25,
- une quantité totale de paquets perdus entre le satellite 20 et le terminal 25,
- une quantité de paquets perdus dans différentes files de qualité de service pour chacune d'une pluralité de classes de service,
- une information d'entrée du terminal 25, et
- un profil d'onde garanti par le terminal 25.

La marge signal-sur-bruit de paliers de la porteuse de signalisation est le rapport entre des paliers de la porteuse de signalisation reçue et le bruit dans les signaux reçus, comparée à la valeur du rapport signal sur bruit au point de fonctionnement du profil de forme d'onde de la porteuse de signalisation. La marge signal-sur-bruit de paliers de la porteuse de signalisation est par exemple la marge du rapport signal-sur-bruit de la porteuse de signalisation émise par un modem d'ancrage.

La marge signal-sur-bruit de paliers de la porteuse de trafic est le rapport entre des paliers de la porteuse de trafic reçue et le bruit dans les signaux reçus, comparée à la valeur du rapport signal sur bruit au point de fonctionnement du profil de forme d'onde de la porteuse de trafic allouée.

Le profil de forme d'onde garanti par le terminal 25 est dépendant d'un bilan de liaison, c'est-à-dire d'une estimation de paramètres atteignables par au moins l'émetteur 15 et le terminal 25 au travers du satellite 20 dans les conditions connues de perturbations pouvant intervenir lors de l'utilisation du système de communication 10. Cette estimation est réalisée lors de la préparation d'une configuration du système de communication 10. Ce profil de forme d'onde dépend d'un besoin opérationnel demandé par un utilisateur de l'émetteur 15 et/ou du terminal 25.

Préférentiellement, le terminal 25 est propre à évaluer plusieurs des paramètres de l'ensemble prédéfini de paramètres, plus préférentiellement encore chacun des paramètres de l'ensemble prédéfini de paramètres.

Le terminal 25 est en outre connecté au dispositif électronique de détermination 30.

Le dispositif de détermination 30 comprend une unité de traitement 35.

Le dispositif de détermination 30 comprend optionnellement en outre un écran d'affichage 40.

L'unité de traitement 35 comprend, par exemple, un calculateur en interaction avec un produit programme d'ordinateur. L'unité de traitement 35 est, par exemple, un ordinateur.

Le calculateur comprend, par exemple, un processeur comprenant une unité de traitement de données, des mémoires et un lecteur de support d'informations, ainsi qu'éventuellement une interface homme-machine.

Le produit programme d'ordinateur comporte un support d'informations.

Le support d'information est un support lisible par le calculateur, usuellement par l'unité de traitement de données. Le support lisible d'informations est un médium adapté à mémoriser des instructions électroniques et capable d'être couplé à un bus d'un système informatique.

A titre d'exemple, le support d'informations est une clé USB, une disquette ou disque souple (de la dénomination anglaise « Floppy disc »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations est mémorisé le programme d'ordinateur comprenant des instructions de programme.

Le programme d'ordinateur est chargeable sur l'unité de traitement 35 et est adapté pour entraîner la mise en oeuvre d'un procédé de détermination d'une cause de perturbation sur une communication entre au moins un satellite et au moins un terminal, lorsque le programme d'ordinateur est mis en oeuvre sur l'unité de traitement du calculateur. Un tel procédé de détermination sera décrit dans la suite de la description.

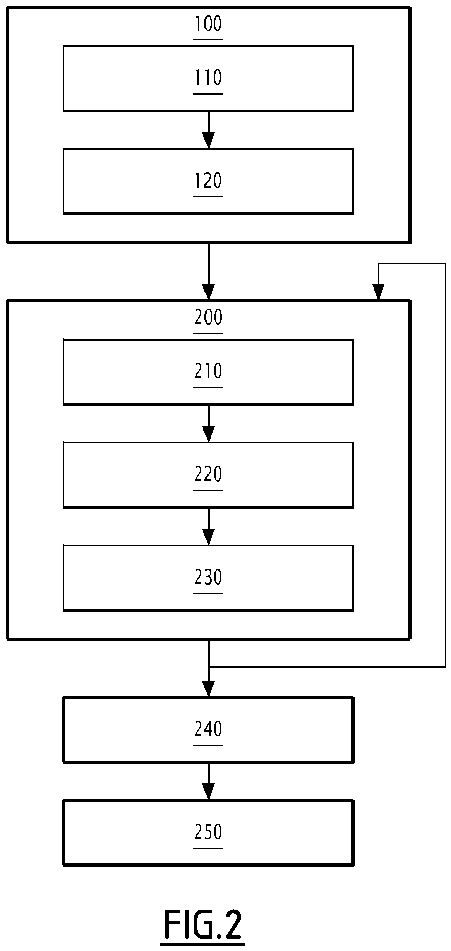

Le fonctionnement du dispositif électronique de détermination 30, mettant en oeuvre le procédé de détermination d'une cause de perturbation sur une communication entre au moins un satellite et au moins un terminal, va maintenant être décrit en référence à l'organigramme de la figure 2.

Le procédé de détermination comprend une phase d'entraînement 100.

La phase d'entraînement 100 comprend une étape 110 de réception d'un jeu de données d'entraînement.

Préférentiellement, le dispositif électronique de détermination 30 reçoit le jeu de données d'entraînement depuis un utilisateur du dispositif de détermination 30.

Le jeu de données d'entraînement comprend plusieurs données d'entraînement. Chaque donnée d'entraînement comprend :
- un groupe de paramètres représentatifs d'une qualité de signaux échangés entre le satellite 20 et le terminal 25, et
- une cause de perturbation associée au groupe de paramètres.

Pour chaque donnée d'entraînement, chaque paramètre du groupe de paramètres est par exemple choisi dans l'ensemble prédéfini de paramètres.

Pour chaque donnée d'entraînement, la cause de la perturbation associée au groupe de paramètres est préférentiellement choisie dans un ensemble prédéfini de causes comprenant au moins une cause accidentelle et au moins une cause d'introduction volontaire d'un signal parasite dans les signaux échangés entre le satellite 20 et le terminal 25. La ou les causes d'introduction volontaire d'un signal parasite résulte donc d'un brouillage volontaire des signaux échangés entre le satellite 20 et le terminal 25.

L'ensemble prédéfini de causes est avantageusement constitué de :
- une pluie dans un environnement du terminal 25,
- un mauvais pointage d'antenne(s) du terminal 25,
- une mauvaise configuration du terminal 25,
- un signal parasite à large bande introduit dans les signaux échangés entre le satellite 20 et le terminal 25,
- un signal parasite à bande(s) partielle(s) introduit dans les signaux échangés entre le satellite 20 et le terminal 25,
- un signal parasite à fréquence pure et fixe, introduit dans les signaux échangés entre le satellite 20 et le terminal 25,
- un signal parasite à fréquence pure et mobile, introduit dans les signaux échangés entre le satellite 20 et le terminal 25, et
- un signal parasite à peigne de raies, introduit dans les signaux échangés entre le satellite 20 et le terminal 25.

On comprend alors que les causes de :
- pluie dans un environnement du terminal 25,
- mauvais pointage d'antenne(s) du terminal 25, et
- mauvaise configuration du terminal 25,
sont des causes accidentelles.

On comprend en outre que les causes de :
- signal parasite à large bande introduit dans les signaux échangés entre le satellite 20 et le terminal 25,
- signal parasite à bande(s) partielle(s) introduit dans les signaux échangés entre le satellite 20 et le terminal 25,
- signal parasite à fréquence pure et fixe, introduit dans les signaux échangés entre le satellite 20 et le terminal 25,
- signal parasite à fréquence pure et mobile, introduit dans les signaux échangés entre le satellite 20 et le terminal 25, et
- signal parasite à peigne de raies, introduit dans les signaux échangés entre le satellite 20 et le terminal 25,
sont des causes d'introduction volontaire d'un signal parasite dans les signaux échangés entre le satellite 20 et le terminal 25.

Le mauvais pointage d'antenne du terminal 25 correspond au cas où la ou les antennes du terminal 25 ne sont pas dirigées en direction du satellite 20. Ainsi, les signaux ne sont pas correctement reçus.

La mauvaise configuration du terminal 25 est par exemple le fait que le terminal 25 n'est pas correctement configuré pour extraire les informations des signaux électromagnétiques reçus.

L'introduction du signal parasite à large bande dans les signaux échangés correspond à un signal, présent dans l'environnement du terminal 25, comportant une bande de fréquence dont une largeur est supérieure à 60 pourcents d'une bande de fréquence allouée pour la transmission des informations entre l'émetteur 15 et le terminal 25.

L'introduction du signal parasite à bande(s) partielle(s) dans les signaux échangés correspond à un signal, dans l'environnement du terminal 25, comportant au moins une bande de fréquences dont une largeur est comprise entre 10 et 60 pourcents de la bande de fréquence allouée pour la transmission des informations entre l'émetteur 15 et le terminal 25. L'introduction du signal parasite à fréquence pure et fixe dans les signaux échangés correspond à un signal, dans l'environnement du terminal 25, comprenant sensiblement une unique fréquence, la fréquence n'évoluant pas dans le temps.

L'introduction du signal parasite à fréquence pure et mobile dans les signaux échangés correspond à un signal, dans l'environnement du terminal 25, comprenant sensiblement une unique fréquence, la fréquence évoluant dans le temps dans la bande de fréquence allouée pour la transmission des informations entre l'émetteur 15 et le terminal 25.L'introduction du signal parasite à peigne de raie dans les signaux échangés correspond à un signal, dans l'environnement du terminal 25, comprenant plusieurs fréquences sensiblement distinctes l'une de l'autre et isolées.

Les données d'entraînement sont par exemple issues de tests effectués en laboratoire au cours desquels chaque donnée d'entraînement est formée.

Par exemple, pour former chaque donnée d'entraînement, une perturbation de cause connue est introduite dans les signaux échangés entre un satellite de test et un terminal de test. Le groupe de paramètres est alors mesuré par des capteurs et/ou évalué par le terminal de test. La donnée d'entraînement associée est alors formée en associant le groupe de paramètres évalués et la cause de perturbation.

La phase d'entraînement 100 comprend en outre une étape 120 d'application d'un algorithme d'entraînement automatique à un modèle d'intelligence artificielle comportant un réseau de neurones, à partir du jeu de données d'entraînement, pour obtenir un modèle entraîné.

Le réseau de neurones comprend une couche d'entrée, une ou plusieurs couches cachées, aussi appelées couches intermédiaires, et une couche de sortie. Chaque couche comprend plusieurs neurones. Le réseau de neurones comprend en outre, pour chaque pair de neurones de deux couches successives, une connexion comprenant un poids réglable, aussi appelé poids synaptique.

La couche d'entrée comprend préférentiellement un nombre de neurones égal au nombre de paramètres dans chaque groupe de paramètres des données d'entraînement.

La couche de sortie comprend avantageusement un nombre de neurones égal au nombre de causes de perturbation dans l'ensemble prédéfini de causes. Chaque neurone de sortie est associé à une des causes de l'ensemble prédéfini de causes. Chaque neurone de sortie est propre à fournir un indicateur de probabilité dont une valeur est préférentiellement comprise entre zéro et un.

L'application de l'algorithme d'entraînement vise à régler les poids réglables de chaque connexion du réseau de neurones pour obtenir un réseau de neurones entraîné.

Le réseau de neurones entraîné est donc configuré pour que, lorsqu'un groupe de paramètres d'une donnée d'entraînement lui est fourni par sa couche d'entrée, déterminer, pour chaque cause de l'ensemble prédéfini de causes, un indicateur de probabilité associé. L'indicateur de probabilité associé à la cause correspondante dans la données d'entrée prend la valeur la plus élevée parmi les indicateurs de probabilité.

Préférentiellement, le modèle d'intelligence artificielle comprend en outre un arbre de décision. L'arbre de décision comprend également des poids réglables.

Préférentiellement, l'application de l'algorithme d'entraînement à l'arbre de décision, à partir des données d'entraînement, permet d'obtenir un arbre de décision entraîné.

L'arbre de décision entraîné est propre à déterminer un sous-ensemble de l'ensemble prédéfini de causes comprenant uniquement des causes probables de la perturbation.

L'arbre de décision entraîné prend par exemple en compte des principes physiques permettant de discriminer, à partir des valeurs des paramètres d'un groupe de paramètres respectif, certaines causes de perturbation.

Plus particulièrement, en fonction de la valeur de certains paramètres évalués par le terminal 25, certaines causes de perturbations sont impossibles. Dans ce cas, ces causes de perturbation sont absentes du sous-ensemble déterminé par l'arbre de décision entraîné.

L'arbre de décision entraîné est tel que, pour chaque donnée d'entraînement, lorsque le groupe de paramètres de ladite donnée lui est fourni, le sous-ensemble déterminé comprend la cause de perturbation associée dans la donnée d'entraînement.

Le procédé comprend en outre une phase d'exploitation 200.

Le terminal 25 détecte, à un premier instant, une perturbation dans les signaux échangés avec le satellite 20, par exemple en évaluant un groupe de paramètres à tester, préférentiellement choisi dans l'ensemble de paramètres précité. Les paramètres du groupe de paramètres à tester sont représentatifs de la qualité de communication à tester.

La phase d'exploitation 200 comprend une étape d'acquisition 210. Lors de l'étape d'acquisition 210, le dispositif de détermination 30 reçoit, depuis le terminal 25, le groupe de paramètres évalués pour le premier instant, dit groupe de paramètres à tester.

La phase d'exploitation 200 comprend en outre une étape de détermination 220. Lors de l'étape de détermination 220, le dispositif de détermination 30 détermine la cause de perturbation associée au groupe de paramètres à tester par application, audit groupe, du modèle entraîné.

Préférentiellement, lors de l'étape de détermination 220, le dispositif de détermination 30 calcule l'indicateur de probabilité associé à chaque cause de l'ensemble de perturbation, par application du réseau de neurones entraîné au groupe de paramètres à tester acquis.

Puis, avantageusement, le dispositif de détermination 30 calcule le sous-ensemble de causes probables, par application de l'arbre de décision entraîné au groupe de paramètres à tester acquis.

Ensuite, préférentiellement, le dispositif électronique de détermination 30 sélectionne la cause de perturbation associée au groupe de paramètres à tester à partir des indicateurs de probabilité et du sous-ensemble calculés. Par exemple, le dispositif électronique de détermination 30 sélectionne ladite cause comme étant comprise dans le sous-ensemble calculé et pour laquelle l'indicateur de probabilité calculé à la valeur la plus élevée.

En complément facultatif, la phase d'exploitation 200 comprend en outre une étape d'affichage 230 lors de laquelle le dispositif électronique de détermination 30 affiche, par exemple sur l'écran d'affichage 40, la cause de perturbation déterminée.

En complément facultatif, la phase d'exploitation 200 est en outre répétée au moins une fois. Le groupe de paramètres à tester acquis lors de l'étape d'acquisition 210 d'une nouvelle phase d'exploitation 200 correspond à des paramètres évalués par le terminal 25 pour un instant postérieur au premier instant.

Préférentiellement, l'étape de détermination 220 de chaque phase d'exploitation 200 est mise en oeuvre entre l'instant associé au groupe de paramètres à tester acquis lors de ladite phase d'exploitation 200 et l'instant associé au groupe de paramètres à tester qui sera acquis lors de la prochaine phase d'exploitation 200. Autrement dit, les phases d'exploitation 200 successives ne sont pas mises en oeuvre a posteriori de l'évaluation des paramètres à tester, mais au fur et à mesure.

Ceci permet donc de détecter encore plus rapidement la cause des perturbations et de pouvoir mettre en oeuvre aussitôt une action corrective pour pallier à ces perturbations.

En complément facultatif, le procédé comprend en outre, suite aux phases d'exploitation 200, une étape 240 de validation de la cause de perturbation. Lors de la phase de validation 240, le dispositif de détermination 30 vérifie si pour au moins un nombre prédéfini d'itérations, préférentiellement successives, la cause de perturbation déterminée est la même. Si tel est le cas, le dispositif de détermination 30 valide alors cette cause comme étant est bien la cause de perturbation des signaux échangés.

Lorsque le procédé comprend en outre l'étape de validation 240, le procédé comprend préférentiellement en outre une nouvelle étape d'affichage 250 analogue à l'étape d'affichage 230 de chaque phase d'exploitation 200 à l'exception du fait que la cause affichée sur l'écran d'affichage 40 est la cause validée.

Selon une variante, le système de communication 10 comprend plusieurs satellites 20 et/ou plusieurs terminaux 30.

Le procédé de détermination selon l'invention permet de déterminer simplement et rapidement la cause de perturbations dans des signaux échangés entre le(s) satellite(s) 20 et le(s) terminal(aux) 25.

Il est ainsi possible de mettre en oeuvre l'action corrective adaptée pour pallier à la perturbation, plutôt que d'attendre que la perturbation cesse.

En outre, grâce à l'arbre de décision, il est possible de prendre en compte des principes physiques pour éviter de mauvaises détections de la part du réseau de neurones.

Les variantes de réalisation et modes de réalisation décrits ci-dessus sont combinables.

## Revendications

1. Procédé de détermination d'une cause de perturbation sur une communication entre au moins un satellite (20) et au moins un terminal (25), le procédé étant mis en oeuvre par un dispositif électronique de détermination (30) et comprenant une phase d'apprentissage (100) comprenant les étapes suivantes :
- la réception (110) d'un jeu de données d'entraînement,
chaque donnée d'entraînement comprenant :
∘ un groupe de paramètres représentatifs d'une qualité de signaux échangés entre le(s) satellite(s) (20) et le(s) terminal(aux) (25), et
∘ une cause de perturbation associée au groupe de paramètres,
- l'application (120) d'un algorithme d'entraînement automatique à un modèle d'intelligence artificielle comportant un réseau de neurones, à partir du jeu de données d'entraînement, pour obtenir un modèle entraîné,
le procédé comprenant en outre une phase d'exploitation (200) comprenant les étapes suivantes :
- l'acquisition (210) d'un groupe de paramètres à tester représentatifs de la qualité de la communication à tester, et
- la détermination (220) de la cause de perturbation par application du modèle entraîné au groupe de paramètres à tester acquis.

2. Procédé selon la revendication 1, dans lequel lors de l'étape de détermination (210) de la phase d'exploitation (200), la cause de perturbation est déterminée parmi un ensemble prédéfini de causes comprenant au moins une cause d'origine accidentelle et au moins une cause d'introduction volontaire d'un signal parasite dans les signaux échangés entre le(s) satellite(s) (20) et le(s) terminal(aux) (25).

3. Procédé selon la revendication 2, dans lequel l'ensemble prédéfini de causes comprend :
- une pluie dans un environnement du ou des terminaux (25),
- un mauvais pointage d'antenne(s) du ou des terminaux (25),
- une mauvaise configuration du ou des terminaux (25),
- un signal parasite à large bande introduit dans les signaux échangés entre le(s) satellite(s) (20) et le(s) terminal(aux) (25),
- un signal parasite à bande(s) partielle(s) introduit dans les signaux échangés entre le(s) satellite(s) (20) et le(s) terminal(aux) (25),
- un signal parasite à fréquence pure et fixe, introduit dans les signaux échangés entre le(s) satellite(s) (20) et le(s) terminal(aux) (25),
- un signal parasite à fréquence pure et mobile, introduit dans les signaux échangés entre le(s) satellite(s) (20) et le(s) terminal(aux) (25), et
- un signal parasite à peigne de raie, introduit dans les signaux échangés entre le(s) satellite(s) (20) et le(s) terminal(aux) (25).

4. Procédé selon la revendication 2 ou 3, dans lequel le modèle d'intelligence artificielle comprend en outre un arbre de décision,
le modèle entraîné obtenu suite à l'étape d'application (120) de la phase d'entrainement (100) comprenant un réseau de neurones entraîné et un arbre de décision entraîné, l'étape de détermination (220) de la phase d'exploitation (200) comprenant :
- le calcul d'un indicateur de probabilité pour chaque cause de l'ensemble prédéfini de causes, par fourniture du groupe de paramètres à tester au réseau de neurones entraîné,
- le calcul d'un sous-ensemble de l'ensemble prédéfini de cause, par fourniture, à l'arbre de décision entraîné, du groupe de paramètres à tester,
le sous-ensemble comprenant au moins une cause probable de perturbation, et
- la sélection de la cause de perturbation à partir des indicateurs de probabilité et du sous-ensemble calculés.

5. Procédé selon la revendication 4, dans lequel la cause de perturbation sélectionnée lors de l'étape de détermination (220) de la phase d'exploitation (200) est la cause comprise dans le sous-ensemble calculé et comprenant l'indicateur de probabilité calculé ayant la valeur la plus élevée.

6. Procédé selon l'une quelconque des revendications 1 à 5, dans lequel la phase d'exploitation (200) est répétée pour une pluralité de groupes de paramètres à tester, représentatifs de la qualité de la communication à tester à des instants distincts, formant des itérations de la phase d'exploitation (200),
préférentiellement, chaque itération étant mise en oeuvre entre deux instants successifs correspondant chacun à un groupe de paramètres à tester.

7. Procédé selon la revendication 6, comprenant en outre, à l'issu de la phase d'exploitation (200), une étape de validation (240) de la cause de perturbation lors de laquelle, si pour au moins un nombre prédéfini d'itérations de la phase d'exploitation (200), préférentiellement successives, la cause de perturbation déterminée est la même, alors valider cette cause comme étant est bien la cause de perturbation des signaux échangés entre le satellite (20) et le terminal (25).

8. Procédé selon l'une quelconque des revendications 1 à 7, dans lequel chaque paramètre à tester est choisi dans un ensemble constitué de :
- une marge d'un rapport signal-sur-bruit de paliers d'une porteuse de signalisation,
- une marge d'un rapport signal-sur-bruit de paliers d'une porteuse de trafic,
- un niveau de la porteuse de signalisation et/ou de la porteuse de trafic,
- une valeur de débit binaire de signaux échangés entre le(s) satellite(s) (20) et le(s) terminal(aux) (25),
- une valeur de modulation de signaux échangés entre le(s) satellite(s) (20) et le(s) terminal(aux) (25),
- une valeur de codage de signaux échangés entre le(s) satellite(s) (20) et le(s) terminal(aux) (25),
- une puissance de consigne appliquée au(x) terminal(aux) (25),
- une quantité totale de paquets perdus entre le(s) satellite(s) (20) et le(s) terminal(aux) (25),
- une quantité de paquets perdus dans différentes files de qualité de service pour chacune d'une pluralité de classes de service,
- une information d'entrée du(es) terminal(aux) (25), et
- un profil d'onde garanti par le(s) terminal(aux) (25).

9. Produit programme d'ordinateur sur lequel est mémorisé un programme d'ordinateur comprenant des instructions de programme, le programme d'ordinateur étant chargé sur une unité de traitement de données et entraînant la mise en oeuvre d'un procédé selon l'une quelconque des revendications 1 à 8 lorsque le programme d'ordinateur est mis en oeuvre sur l'unité de traitement des données.

10. Dispositif électronique de détermination (30) d'une cause de perturbation sur une communication entre au moins un satellite (20) et au moins un terminal (25), le dispositif électronique de détermination (30) comprenant une unité de traitement (35) propre à mettre en oeuvre les étapes d'un procédé de détermination selon l'une quelconque des revendications 1 à 8.
